# EUROPEAN PATENT APPLICATION

(11) **EP 4 759 453 A1**
(43) Date of publication of application: **17.06.2026**
(21) Application number: 24851606.4
(22) Date of filing: 24.07.2024
(51) Int. Cl.: B09B 3/70, C01F 11/18

(54) **METHOD FOR CONTROLLING GYPSUM CONVERSION REACTION AND METHOD FOR PRODUCING CALCIUM CARBONATE**

(30) Priority: 09.08.2023 JP 2023130076
(71) Applicant: Sumitomo Osaka Cement Co., Ltd., Tokyo, 105-8641 (JP)
(72) Inventor: SUZUKI, Reo, Tokyo 105-8641 (JP); OIZUMI, Risa, Tokyo 105-8641 (JP); KIKUCHI, Sadato, Tokyo 105-8641 (JP); MORIKAWA, Takako, Tokyo 105-8641 (JP); KONISHI, Masayoshi, Tokyo 105-8641 (JP)
(74) Representative: Müller-Boré & Partner Patentanwälte PartG mbB
(86) International application number: PCT/JP2024/026456
(87) International publication number: WO 2025/033179

(57) **Abstract**

Provided are a method for controlling a gypsum conversion reaction and a method for producing calcium carbonate that have high versatility to be applicable to a wide variety of materials and can deal with the wide variety of materials through a minor fix and a simple operation. **In** the methods, in a gypsum conversion reaction in which a solution A containing a predetermined alkali metal salt A and a gypsum-containing material are brought into contact with each other to obtain calcium carbonate, one condition selected from a pH of a reaction solution of the solution A and the gypsum-containing material and at least one concentration selected from a carbonate ion concentration, a hydrogen carbonate ion concentration, and a calcium ion concentration in the reaction solution is monitored to determine an end point of the reaction.

## Description

### TECHNICAL FIELD

The present disclosure relates to a method for controlling a gypsum conversion reaction and a method for producing calcium carbonate.

### BACKGROUND

A gypsum-containing material, in particular, a waste containing gypsum, for example, a waste gypsum board or a waste such as a recovery of a flue gas desulfurization process, is treated as an industrial waste as it is and is generally discarded. The discarded waste containing gypsum is buried in a final disposal site. However, the waste containing gypsum has been continuously increased in recent years, and it is expected that the final disposal site will reach its capacity. In consideration of the environmental burden, the waste containing gypsum has been considered to be reused without being discarded as it is (for example, Patent Literatures Nos. 1 and 2).

Patent Literature No. 1 discloses an apparatus and a method for crushing and classifying a gypsum board waste, in which high-purity gypsum and paper for a gypsum board are continuously efficiently separated and recovered from a gypsum board waste. In addition, Patent Literature No. 2 describes a method for treating a gypsum-containing industrial waste, in which an industrial waste such as a gypsum board containing calcium sulfate as a main component is treated using ammonia and carbon dioxide.

### Citation List

### Patent Literature

Patent Literature No. 1: Japanese Laid-open Patent Publication No. 2011-011210
Patent Literature No. 2: Japanese Laid-open Patent Publication No. 2001-000947

### SUMMARY OF INVENTION

### Technical Problem

The present invention has been made under these circumstances, and an object thereof is to provide a method for controlling a gypsum conversion reaction and a method for producing calcium carbonate that have high versatility to be applicable to a wide variety of materials and can deal with the wide variety of materials through a minor fix and a simple operation.

### Solution to Problem

In order to achieve the above object, the present invention provides the following method for controlling a gypsum conversion reaction.
1. A method for controlling a gypsum conversion reaction in which a solution A containing at least one alkali metal salt A selected from an alkali metal carbonate and an alkali metal hydrogen carbonate and a gypsum-containing material are brought into contact with each other to obtain calcium carbonate, the method including:
   monitoring one condition selected from a pH of a reaction solution of the solution A and the gypsum-containing material and at least one concentration selected from a carbonate ion concentration, a hydrogen carbonate ion concentration, and a calcium ion concentration in the reaction solution to determine an end point of the reaction.
   Further, the present invention provides the following method for controlling a gypsum conversion reaction as a preferable embodiment.
2. The method for controlling a gypsum conversion reaction according to 1, in which the gypsum-containing material is continuously or intermittently supplied to the solution A containing the alkali metal salt A.
3. The method for controlling a gypsum conversion reaction according to 1 or 2, in which the solution A containing the alkali metal salt A is continuously or intermittently supplied to the gypsum-containing material.
4. The method for controlling a gypsum conversion reaction according to any one of 1 to 3, in which the solution A containing the alkali metal salt A is a solution obtained by electrolyzing a salt solution by bipolar membrane electrodialysis to prepare an alkali solution, and bringing the alkali solution and gas containing carbon dioxide into contact with each other.
5. The method for controlling a gypsum conversion reaction according to 4, in which the salt solution is a solution B containing an alkali metal salt B.
6. The method for controlling a gypsum conversion reaction according to 5, in which the alkali metal salt B is at least one metal salt selected from an alkali metal chloride, an alkali metal sulfate, and an alkali metal nitrate.
7. The method for controlling a gypsum conversion reaction according to 5, in which an alkali metal of the alkali metal salt B is the same as an alkali metal of the alkali metal salt A.
8. The method for controlling a gypsum conversion reaction according to any one of 1 to 7, in which an alkali metal of the alkali metal salt A is at least one metal selected from sodium and potassium.
   In addition, the present invention provides the following method for producing calcium carbonate.
9. A method for producing calcium carbonate including:
   performing a gypsum conversion reaction in which a solution A containing at least one alkali metal salt A selected from an alkali metal carbonate and an alkali metal hydrogen carbonate and a gypsum-containing material are brought into contact with each other to obtain calcium carbonate, in which
   the gypsum conversion reaction is ended by monitoring one condition selected from a pH of a reaction solution of the solution A and the gypsum-containing material and at least one concentration selected from a carbonate ion concentration, a hydrogen carbonate ion concentration, and a calcium ion concentration in the reaction solution to determine an end point of the reaction.

### Advantageous Effects of Invention

According to the present invention, it is possible to provide a method for controlling a gypsum conversion reaction and a method for producing calcium carbonate that have high versatility to be applicable to a wide variety of materials and can deal with the wide variety of materials through a minor fix and a simple operation.

### BRIEF DESCRIPTION OF DRAWINGS

[FIG. 1] A graph illustrating a result of Example 1.
[FIG. 2] A graph illustrating a result of Example 2.
[FIG. 3] A graph illustrating a simulation result of Example 3.
[FIG. 4] A graph representing a pH of a reaction solution in the simulation result of Example 3.
[FIG. 5] A graph representing a pH of a reaction solution in a simulation result of Example 4.

### DESCRIPTION OF EMBODIMENTS

Hereinafter, an embodiment of the present invention (hereinafter, also referred to as "present embodiment") will be described. The present invention is not limited to the following embodiment, and any changes can be made within a range where the effects of the present invention do not deteriorate. In addition, in the present specification, numerical values regarding "or more", "or less", and "to" that relate to the description of a numerical range are any combination of numerical values. For example, when "CC to DD" and "EE to FF" in a certain numerical range are described, numerical ranges such as "CC to FF" and "EE to DD" are also included.

### [Method for Controlling Gypsum Conversion Reaction]

A method for controlling a gypsum conversion reaction according to the present embodiment is
a method for controlling a gypsum conversion reaction in which a solution A containing at least one alkali metal salt A selected from an alkali metal carbonate and an alkali metal hydrogen carbonate and a gypsum-containing material are brought into contact with each other to obtain calcium carbonate, the method including:
monitoring one condition selected from a pH of a reaction solution of the solution A and the gypsum-containing material and at least one concentration selected from a carbonate ion concentration, a hydrogen carbonate ion concentration, and a calcium ion concentration in the reaction solution to determine an end point of the reaction.

The present inventors conducted a study on reuse of a gypsum-containing material that is mainly discarded as an industrial waste, and focused on the fact that calcium carbonate that is a valuable can be obtained through a reaction of gypsum in the gypsum-containing material and an alkali metal salt. The present inventors thought that an alkali metal salt (for example, an alkali metal carbonate) that is by-produced in a business facility can be used as the alkali metal salt.

However, most of the concentrations of gypsum-containing materials and alkali metal salts that are typically by-produced in the form of a solution are unclear. The reason for this is as follows. For example, in gypsum-containing materials, in particular, gypsum-containing materials that are wastes, most of the contents of gypsum therein are unclear. In addition, alkali metal salts reproduced in business facilities are also typically by-produced as a solution, but the concentrations thereof are diverse and are unclear in most cases. In addition, examples of the alkali metal salts by-produced in business facilities include an alkali metal carbonate and an alkali metal hydrogen carbonate. These alkali metal salts may be by-produced as one kind alone or as a mixture. Further, the alkali metal salts such as an alkali metal carbonate or an alkali metal hydrogen carbonate are not limited to being by-produced in business facilities, and may also be produced outside business facilities. Even in this case, the concentrations are unclear in most cases.

This way, a raw material whose characteristics are unknown needs to be used, and when a reaction of a gypsum-containing material and a solution containing an alkali metal salt is performed, the concentrations of gypsum therein and the alkali metal salt need to be measured to supply the components in the same amount. In addition, the kind of the alkali metal salt may also need to be identified. However, these operations have poor productivity but are complicated.

As a method of treating a gypsum-containing material such as a waste containing gypsum, for example, Patent Literature No. 1 focuses on a method of separating and recovering high-purity gypsum and paper for a gypsum board from a gypsum board waste. However, Patent Literature No. 1 does not focus on a method of converting the gypsum-containing material into another valuable through a chemical reaction. In addition, Patent Literature No. 2 focuses on a chemical reaction of an industrial waste such as a gypsum board and ammonia and carbon dioxide. However, in the chemical reaction on which Patent Literature No. 2 focuses on, these raw materials are put into a container at a predetermined ratio to be stirred and mixed, the container is sealed with a lid, and the mixture is left to stand for one to three months while being stirred once every two or three days. This way, the chemical reaction is very slow (Patent Literature No. 2, paragraph [0024]). Therefore, there is no necessity for identifying the kinds of the raw materials in advance and measuring the concentrations thereof.

Under these circumstances, the present inventors focused on, in a gypsum conversion reaction in which a solution containing at least one alkali metal salt selected from an alkali metal carbonate and an alkali metal hydrogen carbonate and a gypsum-containing material are brought into contact with each other to obtain calcium carbonate, a pH of the reaction solution of the solution and the gypsum-containing material, and a carbonate ion concentration, a hydrogen carbonate ion concentration, and a calcium ion concentration in the reaction solution. By monitoring one condition selected from the pH and the concentrations to determine an end point of the reaction, the present inventors have come to provide a method for controlling a gypsum conversion reaction and a method for producing calcium carbonate that have high versatility to be applicable to a wide variety of materials and can deal with the wide variety of materials through a minor fix and a simple operation.

Regarding the method for controlling a gypsum conversion reaction according to the present embodiment, the gypsum conversion reaction will be described first.

### [Gypsum Conversion Reaction]

The gypsum conversion reaction is a reaction in which a solution A containing at least one alkali metal salt A selected from an alkali metal carbonate and an alkali metal hydrogen carbonate and a gypsum-containing material are brought into contact with each other. In the present reaction, the alkali metal salt A in the solution A and the gypsum in the gypsum-containing material react with each other to obtain calcium carbonate.

### (Gypsum-Containing Material)

As the gypsum-containing material, any material containing gypsum that contains at least one of calcium sulfate or a hydrate of calcium sulfate as a main component can be used without any particular limitation. The calcium sulfate is an anhydrite, and is called gypsum anhydrite. Examples of the hydrate of calcium sulfate include a dihydrate called gypsum dihydrate and a 1/2 hydrate called gypsum hemihydrate. In addition, regarding the anhydrite, for example, when the hydrate is calcined, a soluble gypsum anhydrite (also called "gypsum anhydrite II"), an insoluble gypsum anhydrite (also called "gypsum anhydrite II"), or calcined gypsum such as α type or β type depending on the specification of calcination or the like is also present. Any one of these anhydrites can also be used.

In the control method according to the present embodiment, any of the anhydrite or the hydrate can also be used.

Examples of the gypsum-containing material include not only a product formed of gypsum or a waste thereof such as a gypsum board or a waste gypsum board but also a by-product that is by-produced in the process of producing chemical products, for example, a recovery of a flue gas desulfurization process (also called "flue-gas gypsum", for example, a recovery during a flue gas desulfurization process in copper refining or the like), fluorogypsum (that is by-produced in a process of producing hydrogen fluoride), phosphogypsum (that is by-produced in a process of producing wet phosphoric acid), titanogypsum (that is by-produced in a process of producing titanium oxide), or active silica gypsum (that is by-produced in a process of producing active silica).

In addition, for example, incinerated ash that is produced in the process of incinerating a municipal waste or the like contains gypsum anhydrite. Therefore, a waste such as incinerated ash can be used as the gypsum-containing material. As the other wastes, a gypsum-containing sludge obtained in various waste water treatment processes can also be used as the gypsum-containing material.

This way, in a method for fixing carbon dioxide according to one aspect of the present invention, the gypsum-containing material can be widely adopted from not only gypsum itself but also various wastes and various by-products.

As described above, the gypsum-containing material is a material containing gypsum that contains at least one of calcium sulfate or a hydrate of calcium sulfate as a main component. By bringing the gypsum-containing material into contact with the above-described solution, a reaction of calcium sulfate and the alkali metal salt in the solution occurs. More specifically, in the gypsum conversion reaction, a reaction represented by Reaction Formulae (1) and (2) below progresses.

Ma₂CO₃ + CaSO₄ → CaCO₃ + Ma₂SO₄ ... (1)

2MaHCO₃ + CaSO₄ → CaCO₃ + Ma₂SO₄ + CO₂ + H₂O ... (2)

(in Reaction Formulae (1) and (2), Ma represents an alkali metal)

Through the reaction represented by Reaction Formulae (1) and (2), gypsum in the gypsum-containing material is converted into calcium carbonate. The obtained calcium carbonate is a valuable that can be used as a composition for cement, a material for mortar and concrete, a filler, a building material, or the like. Accordingly, the gypsum conversion reaction can also be referred to as a reaction of producing calcium carbonate.

In the reaction represented by Reaction Formulae (1) and (2), as described below in Examples, when the same amount of the alkali metal salt as calcium sulfate in the gypsum-containing material is added or when the same amount of the gypsum-containing material containing calcium sulfate as the alkali metal salt is added, the gypsum conversion reaction progresses at once before and after the addition of the same amount of the component. Therefore, the alkali metal salt that is added after the progress of the gypsum conversion reaction remains as an excess portion and is discarded. On the other hand, the gypsum-containing material that is added after the progress of the gypsum conversion reaction remains as an excess portion, and thus is an impurity when calcium carbonate is used. In the control method according to the present embodiment, in a reaction such as the gypsum conversion reaction having a high reaction behavior, even a wide variety of materials having any characteristics are used, the gypsum-containing material and the alkali metal salt can be brought into contact with each other without excess or deficiency to control the gypsum conversion reaction through a minor fix and a simple operation.

The content of gypsum in the gypsum-containing material cannot be uniquely determined because it can change depending on whether the gypsum is present as a gypsum anhydrite or a hydrate (gypsum dihydrate or gypsum hemihydrate) and varies depending on which one of the gypsum, the by-product, or the waste is adopted as the gypsum-containing material.

The gypsum-containing material may contain a small amount of gypsum or may contain a large amount of gypsum. The control method according to the present embodiment is applicable to both cases. Typically, the content of calcium sulfate (anhydrite) is 1% by mass or more, 3% by mass or more, or 5% by mass or more. In addition, the upper limit is not particularly limited, and the total amount (that is, 100% by mass) may consist of gypsum. The upper limit is typically 97% by mass or less, 95% by mass or less, or 90% by mass or less. The kind of the gypsum-containing material and the content of gypsum in the gypsum-containing material vary and are unclear. The control method according to the present embodiment can deal with the wide variety of gypsum-containing materials.

### (Alkali Metal Salt A)

In the gypsum conversion reaction, the alkali metal salt A that reacts with the gypsum-containing material is at least one alkali metal salt selected from an alkali metal carbonate and an alkali metal hydrogen carbonate (hereinafter, an alkali metal carbonate and an alkali metal hydrogen carbonate will also be collectively referred to as "alkali metal carbonate or the like").

The control method according to the present embodiment is applicable without any particular limitation as long as it is the alkali metal salt A such as a carbonate containing the alkali metal. As the alkali metal, lithium (Li), potassium (K), or sodium (Na) is preferable, potassium (K) or sodium (Na) is more preferable, and sodium (Na) is still more preferable. A large amount of the alkali metal salt A (alkali metal carbonate or the like) is produced inside and outside a business facility, and the progress of the gypsum conversion reaction using the alkali metal salt A (alkali metal carbonate or the like) is fast. Therefore, the control method according to the present embodiment can be more effectively utilized.

As the solution containing the alkali metal salt A (alkali metal carbonate or the like), for example, a solution that is produced inside and outside a business facility or a surplus produced solution can be used. As the solution, for example, the solution containing the alkali metal carbonate or the like as the alkali metal salt A that is obtained through the reaction of the alkali metal salt such as an alkali metal hydroxide and carbon dioxide can be used. As the solution, for example, a solution obtained through a reaction of an alkali solution (that is, a solution containing a salt such as an alkali metal hydroxide) and gas containing carbon dioxide can be used.

As the alkali solution, for example, an aqueous solution of an alkali metal salt such as an alkali hydroxide that is produced in various devices such as an electrolyzer for an aqueous solution of an alkali metal salt such as an alkali metal chloride or a hydration device for a solid alkali metal hydroxide can be used. Through the reaction of the aqueous solution of the alkali metal salt such as an alkali hydroxide and carbon dioxide, the solution A containing the alkali metal salt A that is at least one alkali metal carbonate or the like among an alkali metal carbonate and an alkali metal hydrogen carbonate can be obtained. In this case, the obtained solution A containing the alkali metal salt A is an aqueous solution, and the solution A is preferably an aqueous solution in the control method according to the present embodiment.

In addition, as the solution containing the alkali metal salt, a solution obtained through a reaction of an alkali solution that is obtained by an electrolyzer using an ion exchange membrane method and gas containing carbon dioxide can be used, and a solution obtained from through a reaction of an alkali solution that is obtained by bipolar membrane electrodialysis and gas containing carbon dioxide can also be preferably used because an alkali solution can be obtained with low energy. Here, the alkali solution is the above-described alkali solution, that is, the aqueous solution of the alkali metal salt such as an alkali metal chloride.

The content of the alkali metal salt A in the solution obtained using any of the above-described methods is likely to be unclear. Therefore, the solution obtained using any of the above-described methods is suitably used as the solution A containing the alkali metal salt A from the viewpoint that the control method according to the present embodiment can be effectively utilized.

Among these, the solution A containing the alkali metal salt A that is obtained by bipolar membrane electrodialysis can be preferably used because an alkali solution can be obtained with low energy. The method using the bipolar membrane electrodialysis is a method in which the solution A containing the alkali metal salt A is obtained by electrolyzing a salt solution by bipolar membrane electrodialysis to prepare an alkali solution, and bringing the alkali solution and gas containing carbon dioxide into contact with each other. By performing the bipolar membrane electrodialysis, an acid solution (when the alkali metal chloride is used, hydrochloric acid) corresponding to the alkali metal salt in the salt solution is by-produced together with the alkali solution.

Preferable examples of the salt solution include a salt containing an alkali metal, for example, a solution (hereinafter, also referred to as "solution B") containing an alkali metal salt (hereinafter, also referred to as "alkali metal salt B") such as an alkali metal chloride, an alkali metal sulfate, or an alkali metal nitrate. These alkali metal salts may be one kind or may contain plural kinds. In the method using the bipolar membrane electrodialysis, the alkali metal of the alkali metal salt B is the same as the alkali metal of the alkali metal salt A. When the solution containing the alkali metal salt B is used as the salt solution, by electrolyzing the salt solution by bipolar membrane electrodialysis, an alkali solution containing a hydroxide of the alkali metal of the alkali metal salt B is obtained. By bringing the alkali solution into contact with gas containing carbon dioxide, a carbonate or a hydrogen carbonate of the alkali metal of the alkali metal salt B is produced, and the solution A containing the alkali metal salt A is obtained.

As described above, the content of the alkali metal salt A in the solution A containing the alkali metal salt A is unclear. In consideration of the above-described methods, the circumstances where the alkali metal salt A is obtained inside and outside a business facility, and the like, the content is typically 0.1 mol/L or more, 0.3 mol/L or more, or 0.5 mol/L or more, and the upper limit is 2 mol/L or less, 1.5 mol/L or less, 1.3 mol/L or less, or 1.0 mol/L or less. The content of the alkali metal salt A in the solution A containing the alkali metal salt A varies and is unclear. The control method according to the present embodiment can deal with the solution A.

### (Contact)

In the control method according to the present embodiment, the gypsum conversion reaction is performed by bringing the solution A containing the alkali metal salt A into contact with the gypsum-containing material. By bringing the solution A containing the alkali metal salt A into contact with the gypsum-containing material, the reaction of the alkali metal salt A and gypsum in the gypsum-containing material occurs, and calcium carbonate is obtained.

In the control method according to the present embodiment, the contact method is not particularly limited as long as the solution A containing the alkali metal salt A can be brought into contact with the gypsum-containing material. For example, the contact can be performed while continuously or intermittently supplying the gypsum-containing material to the solution A containing the alkali metal salt A or while continuously or intermittently supplying the solution A containing the alkali metal salt A to the gypsum-containing material.

When the contact is performed while continuously or intermittently supplying the gypsum-containing material to the solution A containing the alkali metal salt A, a given amount of the solution A may be stored in a reaction vessel, and the gypsum-containing material may be continuously or intermittently supplied to the reaction vessel. The gypsum-containing material may be crushed into a predetermined size and supplied in consideration of ease of the supply, ease of the reaction, and the like. Examples of the gypsum-containing material include a material that has passed through a 5 mm sieve, a material that has passed through a 10 mm sieve, a material that has passed through a 15 mm sieve, a material that has passed through a 30 mm sieve, and a material that has passed through a 50 mm sieve.

In consideration of easy supply, management of the supply amount, and the like, the supply of the gypsum-containing material can be performed, for example, using a particulate quantitative feeder, a hopper including a damper, or the like.

In addition, the storage amount of the solution A in the reaction vessel cannot be uniquely determined because it varies depending on the treatment amount and size of the gypsum-containing material, the size of the reaction vessel, and the like. It is preferable that a depth at which the solution A is stored in the reaction vessel is more than or equal to a depth that covers the entire surface of the gypsum-containing material, that is the size of the gypsum-containing material.

When the contact is performed while continuously or intermittently supplying the solution A containing the alkali metal salt A to the gypsum-containing material, the size of the gypsum-containing material is the same as that when the contact is performed while continuously or intermittently supplying the gypsum-containing material.

In consideration of easy supply, management of the supply amount, and the like, the supply of the solution A can be performed, for example, using a liquid quantitative feeder or the like.

### [Determination of End Point of Reaction]

In the method for controlling the gypsum conversion reaction according to the present embodiment, in the gypsum conversion reaction, one condition selected from a pH of a reaction solution of the solution A and the gypsum-containing material and at least one concentration selected from a carbonate ion concentration, a hydrogen carbonate ion concentration, and a calcium ion concentration in the reaction solution is monitored to determine an end point of the reaction. By monitoring one condition selected from the pH and the concentrations to determine an end point of the reaction, the control method has high versatility to be applicable to a wide variety of materials and can deal with a wide variety of materials through a minor fix and a simple operation.

When the solution A and the gypsum-containing material are brought into contact with each other, the pH of the reaction solution and the concentration among the carbonate ion concentration, the hydrogen carbonate ion concentration, and the calcium ion concentration in the reaction solution vary depending on an increase in the amount of contact between the solution A and the gypsum-containing material.

### (Continuous or Intermittent Supply of Gypsum-containing material)

When the contact is performed while continuously or intermittently supplying the gypsum-containing material to the solution A containing the alkali metal salt A, as the supply amount of the gypsum-containing material increases, the pH of the reaction solution decreases, the carbonate ion concentration and the hydrogen carbonate ion concentration decrease, and the calcium ion concentration increases.

For example, as illustrated in Example 1, when the reaction starts, that is, when the supply of the gypsum-containing material starts, the pH of the reaction solution gradually decreases, and at a time point where the same amount of the gypsum-containing material (more strictly, gypsum (calcium sulfate) in the gypsum-containing material) as the alkali metal salt A in the solution A is supplied, the pH of the reaction solution rapidly decreases. Next, even when the gypsum-containing material is supplied, there is substantially no change in the pH of the reaction solution. The gypsum-containing material that is supplied after the rapid decrease does not contribute to the reaction, remains as an excess portion, and thus is an impurity when calcium carbonate is used. Accordingly, in the control method according to the present embodiment, when the pH of the reaction solution is monitored while continuously or intermittently supplying the gypsum-containing material, the end point of the reaction is determined to be the time point where the pH rapidly changes.

It is considered from a result of Example 3 described below that, regarding at least one concentration selected from the carbonate ion concentration, the hydrogen carbonate ion concentration, and the calcium ion concentration in the reaction solution, the behavior rapidly changes at a time point where gypsum (calcium sulfate) in the gypsum-containing material is supplied. In a case where the gypsum-containing material is supplied, when the reaction starts, the carbonate ion concentration in the reaction solution gradually decreases, and at a time point where the same amount of the gypsum-containing material (more strictly, gypsum (calcium sulfate) in the gypsum-containing material) as the alkali metal salt A in the solution A is supplied, the carbonate ion concentration in the reaction solution rapidly decreases. Next, even when the gypsum-containing material is supplied, there is substantially no change in the carbonate ion concentration in the reaction solution. In addition, when the reaction starts, the hydrogen carbonate ion concentration and the calcium ion concentration in the reaction solution gradually increases, and at a time point where the same amount of the gypsum-containing material (more strictly, gypsum (calcium sulfate) in the gypsum-containing material) as the alkali metal salt A in the solution A is supplied, the hydrogen carbonate ion concentration and the calcium ion concentration in the reaction solution rapidly increase. Next, even when the gypsum-containing material is supplied, there is substantially no change in the hydrogen carbonate ion concentration and the calcium ion concentration in the reaction solution.

Accordingly, in the control method according to the present embodiment, when at least one concentration selected from the carbonate ion concentration, the hydrogen carbonate ion concentration, and the calcium ion concentration in the reaction solution is monitored while continuously or intermittently supplying the gypsum-containing material, the end point of the reaction is determined to be the time point where these concentrations rapidly change (increase or decrease).

The rapid decrease in the pH of the reaction solution and the rapid change in the various concentrations may be determined by monitoring the amount of change per unit time or unit supply amount. The unit time and the unit supply amount cannot be uniquely determined because it can vary depending on the supply amount of the solution A and the gypsum-containing material for the gypsum conversion reaction, the contents of the alkali metal A and gypsum, and the like. In consideration of ease of the determination on the rapid decrease in the pH of the reaction solution, and the rapid change in the various concentrations, the unit time and the unit supply amount may be selected in the following range as a standard.

Regarding the unit time, the lower limit may be selected from a range of 15 seconds or longer, 30 seconds or longer, 45 seconds or longer, 1 minute or longer, 2 minutes or longer, 3 minutes or longer, and 5 minutes or longer, and the upper limit may be selected from a range of 10 minutes or shorter, 9 minutes or shorter, 8 minutes or shorter, and 7 minutes or shorter. In addition, regarding the unit supply amount, in consideration of the same factors as those of the unit time, the lower limit may be selected from a range of 10 g or more, 25 g or more, 50 g or more, 75 g or more, and 90 g or more, and the upper limit may be selected from a range of 300 g or less, 250 g or less, 200 g or less, 175 g or less, and 150 g or less.

More specifically, during the determination based on the pH of the reaction solution, a case where a ratio (pHₙ/pHₙ₋₁) of the amount of change between the pH of the n-th measurement per unit time or unit supply amount (pHₙ, n represents the number of times, which is an integer) and the pH of the previous measurement (pHₙ₋₁) is 96.0% or less, 95.0% or less, 94.0% or less, 93.0% or less, or 92.0% or less may be used as a standard for the determination on the rapid change.

As illustrated in Example 1, an inclination of the amount of change of pH (d(pH)/dW) obtained by dividing the amount of change of pH (d(pH)) by the amount of the gypsum-containing material (dW) supplied when the amount of change is reached can be obtained as a standard for the determination of the rapid change. For example, by setting the amount of the gypsum-containing material (dW) to the unit supply amount, the inclination of the amount of change of pH (d(pH)/dW) may be calculated for the determination from the amount of change of pH (d(pH)) corresponding to the unit supply amount.

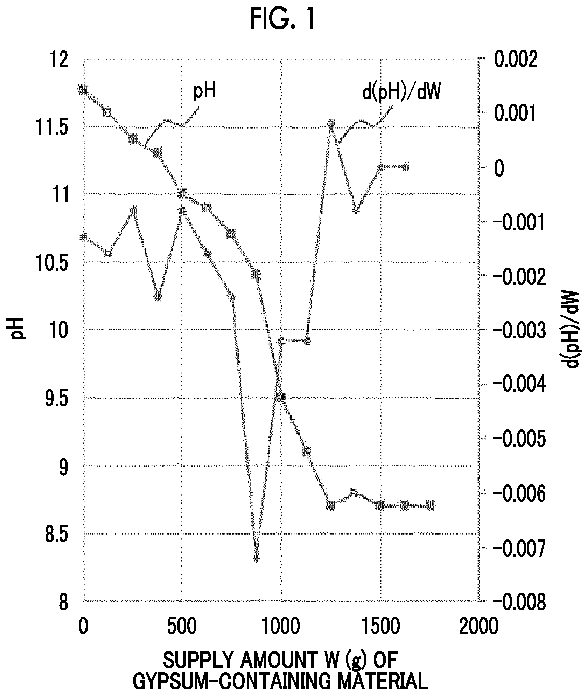

In addition, as illustrated in FIG. 1 of Example 1, when a point where the amount of change of pH clearly increases (in FIG. 1 a time point where the addition amount of the gypsum-containing material is changed from 875 g to 1000 g) is present, the end point of the reaction can also be determined using the point without considering the ratio of the amount of change of pH and the inclination of the amount of change.

More specifically, during the determination based on the various concentrations, in the case of the carbonate ion concentration, a case where a ratio of the amount of change (C(X₁)ₙ/C(X₁)ₙ₋₁) between the concentration of the n-th measurement per unit time or per unit supply amount (C(X₁)ₙ, X₁ represents the carbonate ions, n represents the number of times, which is an integer) and the concentration of the previous measurement (C(X₁)ₙ₋₁) is 93.0% or less, 90.0% or less, 85.0% or less, or 80.0% or less may be used as a standard for the determination on the rapid change.

As in the pH of the reaction solution, the rapid change can also be determined using an inclination of the amount of change of the concentration obtained by dividing the amount of change of the carbonate ion concentration by the amount of the gypsum-containing material supplied when the amount of change is reached. In addition, when a point where the amount of change clearly increases is present, the end point of the reaction can also be determined using the point without considering the ratio of the amount of change.

In the case of the hydrogen carbonate ion concentration or the calcium ion concentration, a case where a ratio of the amount of change (C(X₂)ₙ/C(X₂)ₙ₋₁) between the concentration of the n-th measurement per unit time or per unit supply amount (C(X₂)ₙ, X₂ represents the hydrogen carbonate ions or the calcium ions, n represents the number of times, which is an integer) and the concentration of the previous measurement (C(X₂)ₙ₋₁) is 105.0% or more, 110.0% or more, 115.0% or more, 120.0% or more, 125.0% or more, or 130.0% or more may be used as a standard for the determination on the rapid change.

In addition, as in the pH of the reaction solution, the rapid change can also be determined using an inclination of the amount of change of the concentration obtained by dividing the amount of change of the hydrogen carbonate ion concentration and the calcium ion concentration by the amount of the gypsum-containing material supplied when the amount of change is reached. In addition, when a point where the amount of change clearly increases is present, the end point of the reaction can also be determined using the point without considering the ratio of the amount of change.

As illustrated in Example 1, there is a case where a plurality of positions correspond to the standard for the determination of the rapid change when the end point of the reaction can be determined. In this case, it is preferable to end the reaction at the first corresponding time point, but the reaction may end at the final corresponding time point.

The supply amount of the gypsum-containing material cannot be uniquely determined and is not particularly limited because it can vary depending on the amount of gypsum in the gypsum-containing material and the content of the alkali metal salt A in the solution A. In consideration of ease of the determination on the rapid decrease in the pH of the reaction solution, and the rapid change in the various concentrations, when the gypsum-containing material is continuously supplied, with respect to the volume 10 L of the solution A, the lower limit may be adopted from a range of 1 g/min or more, 3 g/min or more, 5 g/min or more, 10 g/min or more, or 15 g/min or more, and the upper limit may be adopted from a range of 50 g/min or less, 40 g/min or less, 30 g/min or less, or 25 g/min or less as a standard for the supply amount of the gypsum-containing material. In addition, when the gypsum-containing material is intermittently supplied, the supply amount may be 1 g or more (corresponding to "1 g/min or more" described above) or 3 g or more (corresponding to "3 g/min or more" described above), for example, per unit time of 1 minute where the supply amount corresponds to the supply rate and the unit time during the continuous supply, and may be 2 g or more (corresponding to "1 g/min or more" described above) or 6 g or more (corresponding to "3 g/min or more" described above) per unit time of 2 minutes.

### (Continuous or Intermittent Supply of Solution A)

When the contact is performed while continuously or intermittently supplying the solution A containing the alkali metal salt A to the gypsum-containing material, as the supply amount of the gypsum-containing material increases, the pH of the reaction solution increases, the carbonate ion concentration and the hydrogen carbonate ion concentration increase, and the calcium ion concentration decreases.

For example, as described in Example 2, when the reaction starts, that is, when the supply of the solution A starts, the pH of the reaction solution gradually increases, and at a time point where the same amount of the gypsum-containing material (more strictly, gypsum (calcium sulfate) in the gypsum-containing material) as the alkali metal salt A in the solution A is supplied, the pH of the reaction solution rapidly increases. Next, when the solution A is supplied, the pH of the reaction solution gradually increases again. After the rapid increase, the pH of the reaction solution increases together with the supply of the solution A, and an increase in pH represents an increase toward the pH of the solution A. Therefore, the solution A that is supplied after the rapid increase of pH does not contribute to the reaction, remains as an excess portion, and thus is unnecessary. Accordingly, in the control method according to the present embodiment, when the pH of the reaction solution is monitored while continuously or intermittently supplying the solution A, the end point of the reaction is determined to be the time point where the pH rapidly changes.

It is considered from the result of Example 3 described below that, regarding at least one concentration selected from the carbonate ion concentration, the hydrogen carbonate ion concentration, and the calcium ion concentration in the reaction solution, the behavior rapidly changes at a time point where gypsum (calcium sulfate) in the gypsum-containing material is supplied. In a case where the solution A is supplied, when the reaction starts, the carbonate ion concentration in the reaction solution gradually increases, and at a time point where the same amount of the gypsum-containing material (more strictly, gypsum (calcium sulfate) in the gypsum-containing material) as the alkali metal salt A in the solution A is supplied, the carbonate ion concentration in the reaction solution rapidly increases. Next, even when the gypsum-containing material is supplied, there is substantially no change in the carbonate ion concentration in the reaction solution. In addition, when the reaction starts, the hydrogen carbonate ion concentration and the calcium ion concentration in the reaction solution gradually decreases, and at a time point where the same amount of the gypsum-containing material (more strictly, gypsum (calcium sulfate) in the gypsum-containing material) as the alkali metal salt A in the solution A is supplied, the hydrogen carbonate ion concentration and the calcium ion concentration in the reaction solution rapidly decrease. Next, even when the gypsum-containing material is supplied, there is substantially no change in the hydrogen carbonate ion concentration and the calcium ion concentration in the reaction solution.

Accordingly, in the control method according to the present embodiment, when at least one concentration selected from the carbonate ion concentration, the hydrogen carbonate ion concentration, and the calcium ion concentration in the reaction solution is monitored while continuously or intermittently supplying the solution A, the end point of the reaction is determined to be the time point where these concentrations rapidly change (increase or decrease).

When the solution A is continuously or intermittently supplied, the rapid decrease of the pH of the reaction solution and the rapid change in the various concentrations can be determined using the same method as when the gypsum-containing material is continuously or intermittently supplied.

The unit time is the same as that when the gypsum-containing material is continuously or intermittently supplied. In addition, regarding the unit supply amount, the lower limit may be selected from a range of 0.1 L or more, 0.2 L or more, 0.3 L or more, and 0.5 L or more, and the upper limit may be selected from a range of 10.0 L or less, 8.0 L or less, 6.0 L or less, 5.0 L or less, or 3.5 L or less.

When the solution A is continuously or intermittently supplied, the rapid decrease of the pH of the reaction solution and the rapid change in the various concentrations may be determined by monitoring the amount of change per unit time or unit supply amount using the same method as when the gypsum-containing material is continuously or intermittently supplied. The unit time and the unit supply amount cannot be uniquely determined because it can vary depending on the supply amount of the solution A and the gypsum-containing material for the gypsum conversion reaction, the contents of the alkali metal A and gypsum, and the like. In consideration of ease of the determination on the rapid decrease in the pH of the reaction solution, and the rapid change in the various concentrations, the unit time and the unit supply amount may be selected in the following range as a standard.

More specifically, during the determination based on the pH of the reaction solution, a case where a ratio (pHₙ/pHₙ₋₁) of the amount of change between the pH of the n-th measurement per unit time or unit supply amount (pHₙ, n represents the number of times, which is an integer) and the pH of the previous measurement (pHₙ₋₁) is 103.0% or more, 105.0% or more, 106.0% or more, 107.0% or more, 108.0% or more, or 108.2% or more may be used as a standard of the determination on the rapid change.

As illustrated in Example 2, an inclination of the amount of change of pH (d(pH)/dV) obtained by dividing the amount of change of pH (d(pH)) by the amount of the solution A (dV) supplied when the amount of change is reached can be obtained as a standard of the determination of the rapid change. For example, by setting the amount of the solution A (dV) to the unit supply amount, the inclination of the amount of change of pH (d(pH)/dV) may be calculated for the determination from the amount of change of pH (d(pH)) corresponding to the unit supply amount.

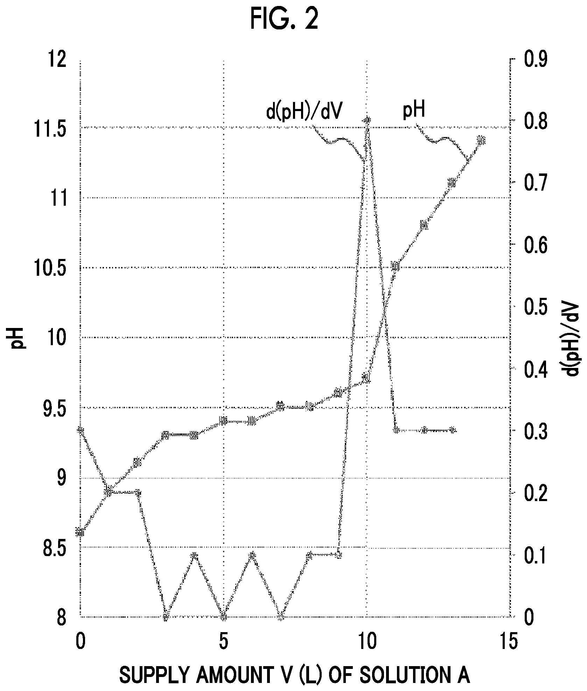

As illustrated in FIG. 2 of Example 2, when a point where the inclination of the amount of change of pH clearly increases (in FIG. 2 a time point where the addition amount of the solution A is changed from 10 L to 11 L) is present, the end point of the reaction can also be determined using the point without considering the ratio of the amount of change of pH and the inclination of the amount of change.

More specifically, during the determination based on the various concentrations, in the case of the hydrogen carbonate ion concentration or calcium ion concentration, a case where a ratio of the amount of change (C(Y₁)ₙ/C(Y₁)ₙ₋₁) between the concentration of the n-th measurement per unit time or per unit supply amount (C(Y₁)ₙ, Y₁ represents the hydrogen carbonate ions or the calcium ions, n represents the number of times, which is an integer) and the concentration of the previous measurement (C(Y₁)ₙ₋₁) is 93.0% or less, 90.0% or less, 85.0% or less, 80.0% or less, or 77.0% or less may be used as a standard of the determination on the rapid change.

In addition, as in the pH of the reaction solution, the rapid change can also be determined using an inclination of the amount of change of the concentration obtained by dividing the amount of change of the hydrogen carbonate ion concentration and the calcium ion concentration by the amount of the solution A supplied when the amount of change is reached. In addition, when a point where the amount of change clearly increases is present, the end point of the reaction can also be determined using the point without considering the ratio of the amount of change.

In the case of the carbonate ion concentration, a case where a ratio of the amount of change (C(Y₂)ₙ/C(Y₂)ₙ₋₁) between the concentration of the n-th measurement per unit time or per unit supply amount (C(Y₂)ₙ, Y₂ represents the carbonate ions, n represents the number of times, which is an integer) and the concentration of the previous measurement (C(Y₂)ₙ₋₁) is 105.0% or more, 110.0% or more, 115.0% or more, 120.0% or more, or 125.0% or more may be used as a standard for the determination on the rapid change.

In addition, as in the pH of the reaction solution, the rapid change can also be determined using an inclination of the amount of change of the concentration obtained by dividing the amount of change of the carbonate ion concentration by the amount of the solution A supplied when the amount of change is reached. In addition, when a point where the amount of change clearly increases is present, the end point of the reaction can also be determined using the point without considering the ratio of the amount of change.

The supply amount of the solution A cannot be uniquely determined and is not particularly limited because it can vary depending on the amount of the alkali metal salt A in the solution A and the content of gypsum in the gypsum-containing material. In consideration of ease of the determination on the rapid decrease in the pH of the reaction solution, and the rapid change in the various concentrations, when the solution A is continuously supplied, with respect to the mass 1 kg of the gypsum-containing material, the lower limit may be adopted from a range of 0.1 L/min or more, 0.2 L/min or more, 0.3 L/min or more, 0.5 L/min or more, or 1.0 L/min or more, and the upper limit may be adopted from a range of 10.0 L/min or less, 8.0 L/min or less, 6.0 L/min or less, or 5.0 L/min or less as a standard for the supply amount of the solution A.

In addition, when the solution A is intermittently supplied, the supply amount may be 0.1 L or more or 0.2 or more, for example, per unit time of 1 minute where the supply amount corresponds to the supply rate and the unit time during the continuous supply, and may be 0.3 L or more or 0.5 L or more per unit time of 2 minutes.

In the control method according to the present embodiment, the pH of the reaction solution may be continuously measured using an online pH meter, or may be sampled and measured every time. In addition, the carbonate ion concentration, the hydrogen carbonate ion concentration, and the calcium ion in the reaction solution may be continuously measured using an online TOC meter or the like, or may be sampled and measured every time.

### [Method for Producing Calcium Carbonate]

A method for producing calcium carbonate according to the present embodiment includes:
performing a gypsum conversion reaction in which a solution A containing at least one alkali metal salt A selected from an alkali metal carbonate and an alkali metal hydrogen carbonate and a gypsum-containing material are brought into contact with each other to obtain calcium carbonate, in which
the gypsum conversion reaction is ended by monitoring one condition selected from a pH of a reaction solution of the solution A and the gypsum-containing material and at least one concentration selected from a carbonate ion concentration, a hydrogen carbonate ion concentration, and a calcium ion concentration in the reaction solution to determine an end point of the reaction.

The method for producing calcium carbonate according to the present embodiment has high versatility to be applicable to a wide variety of materials and can deal with a wide variety of materials through a minor fix and a simple operation. Further, the gypsum conversion reaction can be performed without excess or deficiency. Therefore, calcium carbonate can be efficiently produced.

Therefore, as described above, the gypsum conversion reaction is a reaction in which a solution A containing at least one alkali metal salt A selected from an alkali metal carbonate and an alkali metal hydrogen carbonate and a gypsum-containing material are brought into contact with each other to obtain calcium carbonate, and the alkali metal salt A in the solution A and the gypsum in the gypsum-containing material react with each other to obtain calcium carbonate.

In the method for producing calcium carbonate according to the present embodiment, the gypsum conversion reaction, the alkali metal salt A used for the present reaction, and the method of bringing the solution A containing the alkali metal salt A and the gypsum-containing material into contact with each other are the same as described above in the control method according to the present embodiment.

In addition, a pH of the reaction solution and at least one concentration selected from a carbonate ion concentration, a hydrogen carbonate ion concentration, and a calcium ion concentration in the reaction solution, and monitoring of one condition selected therefrom to determine an end point of the reaction are the same as described above in the control method according to the present embodiment.

### Examples

Hereinafter, the present invention will be described in detail using Examples, but is not limited to the following Examples.

### (Example 1)

A 0.55 M sodium carbonate aqueous solution was prepared as a typical sample of the solution A containing the alkali metal salt A, and gypsum dihydrate (calcium sulfate dihydrate, purity: 98%, dimension: a product completely passed through a 100 µm sieve) was prepared as the gypsum-containing material.

11.6 L of the sodium carbonate aqueous solution was put into the reaction vessel, and while supplying gypsum dihydrate at a supply rate of 20 g/min, the pH of the reaction solution was measured whenever 125 g of the gypsum-containing material was supplied. The measurement result is illustrated in FIG. 1. In addition, FIG. 1 illustrates the amount of change of pH (d(pH)/dW).

According to Example 1, when the supply of the gypsum-containing material started, the pH of the reaction solution decreased immediately. Therefore, it can be seen that the gypsum conversion reaction started immediately. Further, it can be seen that, when the supply of the gypsum-containing material was continued, the pH of the reaction solution gradually decreased, and the pH rapidly decreased at a supply amount of 900 g or more and 1000 g or less. Further, the pH decreased to the same degree until the supply amount was 1200 g, and even when the gypsum-containing material was supplied any more, the pH of the reaction solution did not substantially change.

In Example 1, the end point of the gypsum conversion reaction can be determined because the pH was 9.5 (pH₈ was 9.5) at a time point where the supply amount of the gypsum-containing material was 1000 g (the eighth measurement when the unit supply amount was 125 g), and the pH was 10.4 (pH₇ was 10.4) at a time point where the supply amount of the previous measurement was 875 g, and the ratio of the amount of change (pH₈/pH₇) was 91.3%. In addition, as in the case of the time point of 1000 g, the ratio of the amount of change (pH₉/pH₈) was 95.8% (= 9.1/9.5) at a time point where the supply amount was 1125 g, and the ratio of the amount of change (pH₁₀/pH₉) was 95.6% (= 8.7/9.1) at a time point where the supply amount was 1250 g. Therefore, in both cases, the end point of the reaction can be determined. In addition, as illustrated in FIG. 1, in all the ranges of the supply amount of the gypsum-containing material from 875 g to 1000 g to 1125 g to 1250 g, a rapid decrease in pH was able to be clearly verified. Therefore, the end point of the reaction may be determined at all the time points where the supply amounts of the gypsum-containing material were 1000 g, 1125 g, and 1250 g.

This way, in Example 1, the end point of the reaction can be determined at a plurality of positions. However, when the control method according to the present embodiment is actually performed, the reaction may be ended at the initially determined end point of the reaction.

### (Example 2)

The solution A and the gypsum-containing material used in Example 1 were used.

1700 g of the gypsum-containing material was put into the reaction vessel, and while supplying the solution A at a supply rate of 1.0 L/min, the pH of the reaction solution was measured whenever 1 L of the solution A was supplied. The measurement result is illustrated in FIG. 2. In addition, FIG. 2 illustrates the amount of change of pH (d(pH)/dV).

According to Example 2, when the supply of the solution A started, the pH of the reaction solution increased immediately. Therefore, it can be seen that the gypsum conversion reaction started immediately. Further, it can be seen that, when the supply of the solution A was continued, the pH of the reaction solution gradually increased, and the pH rapidly increased at a supply amount of 10 L or more and 11 L or less. Further, the pH increased until the supply amount was 14 L while being slowed. It is considered that, when the solution A was further supplied the solution A did not contribute to the reaction, and thus the pH of the reaction solution approached the pH of the solution A.

In Example 2, the end point of the gypsum conversion reaction can be determined because the pH was 10.5 (pH₁₁ was 10.5) at a time point where the supply amount of the solution A was 11 L (the eleventh measurement when the unit supply amount was 1 L), and the pH was 9.7 (pH₁₀ was 9.7) at a time point where the supply amount of the previous measurement was 10 L, and the ratio of the amount of change (pH₁₁/pH₁₀) was 108.2%. In addition, as illustrated in FIG. 2, when the supply amount of the solution A was changed from 10 L to 11 L, a rapid increase of pH was clearly verified. Therefore, the end point of the reaction may be determined using this rapid increase.

### (Example 3)

Using simulation software ("PHREEQC Ver. 3 (trade name)", U.S. Geological Survey), simulation of the gypsum conversion reaction was performed under the same conditions as those of Example 2.

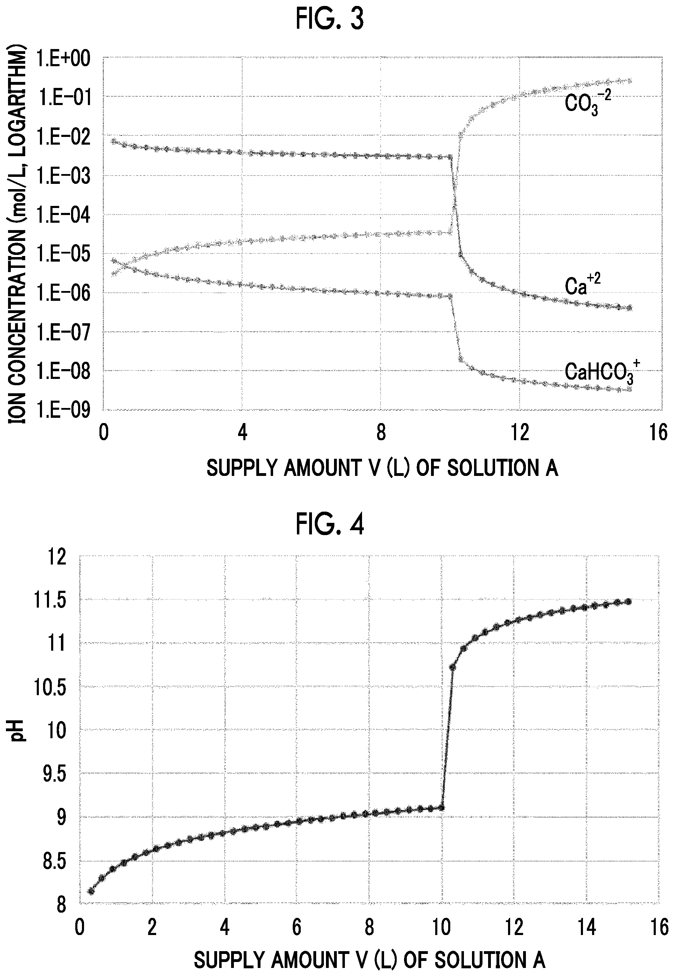

1700 g of the gypsum-containing material was put into the reaction vessel, the solution A was supplied at a supply rate of 1.0 L/min as the supply amount thereof, and simulation results of the carbonate ion concentration, the hydrogen carbonate ion concentration, and the calcium ion concentration in the reaction solution were plotted whenever 0.3 L of the solution A was supplied. The results are illustrated in FIG. 3. In addition, FIG. 4 is a diagram where the simulation result of the pH of the reaction solution was plotted.

According to Example 3, as illustrated in FIG. 4, the behavior of the pH of the reaction solution was the same as that of Example 2 where the solution A was supplied to the gypsum-containing material, and the simulation results including the result of each of the ion concentrations illustrated in FIG. 3 were considered to be appropriate. Accordingly, each of the ion concentrations in Example 2 was considered to be the same as the behavior of Example 3 illustrated in FIG. 3.

### (Example 4)

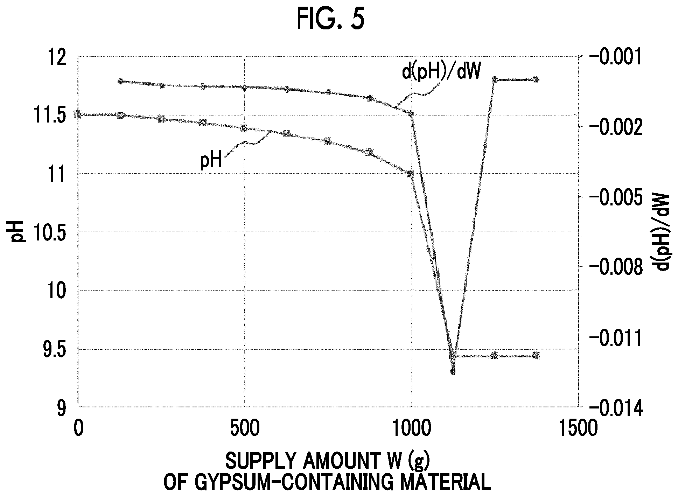

Using simulation software ("PHREEQC Ver. 3 (trade name)", U.S. Geological Survey), simulation of the gypsum conversion reaction was performed under the same conditions as those of Example 1. 11.6 L of the sodium carbonate aqueous solution was put into the reaction vessel, and while supplying gypsum dihydrate at a supply rate of 20 g/min, the simulation result regarding the pH of the reaction solution was plotted whenever 125 g of the gypsum-containing material was supplied. The results are illustrated in FIG. 5.

According to Example 4, as illustrated in FIG. 5, the behavior of the pH of the reaction solution was the same as that of Example 1 where the gypsum-containing material was supplied to the solution A, and the simulation results were considered to be appropriate as in Example 3.

## Claims

1. A method for controlling a gypsum conversion reaction in which a solution A containing at least one alkali metal salt A selected from an alkali metal carbonate and an alkali metal hydrogen carbonate and a gypsum-containing material are brought into contact with each other to obtain calcium carbonate, the method comprising:
monitoring one condition selected from a pH of a reaction solution of the solution A and the gypsum-containing material and at least one concentration selected from a carbonate ion concentration, a hydrogen carbonate ion concentration, and a calcium ion concentration in the reaction solution to determine an end point of the reaction.

2. The method for controlling a gypsum conversion reaction according to Claim 1, wherein the gypsum-containing material is continuously or intermittently supplied to the solution A containing the alkali metal salt A.

3. The method for controlling a gypsum conversion reaction according to Claim 1, wherein the solution A containing the alkali metal salt A is continuously or intermittently supplied to the gypsum-containing material.

4. The method for controlling a gypsum conversion reaction according to Claim 1, wherein the solution A containing the alkali metal salt A is a solution obtained by electrolyzing a salt solution by bipolar membrane electrodialysis to prepare an alkali solution, and bringing the alkali solution and gas containing carbon dioxide into contact with each other.

5. The method for controlling a gypsum conversion reaction according to Claim 4, wherein the salt solution is a solution B containing an alkali metal salt B.

6. The method for controlling a gypsum conversion reaction according to Claim 5, wherein the alkali metal salt B is at least one metal salt selected from an alkali metal chloride, an alkali metal sulfate, and an alkali metal nitrate.

7. The method for controlling a gypsum conversion reaction according to Claim 5, wherein an alkali metal of the alkali metal salt B is the same as an alkali metal of the alkali metal salt A.

8. The method for controlling a gypsum conversion reaction according to Claim 1, wherein an alkali metal of the alkali metal salt A is at least one metal selected from sodium and potassium.

9. A method for producing calcium carbonate comprising:
performing a gypsum conversion reaction in which a solution A containing at least one alkali metal salt A selected from an alkali metal carbonate and an alkali metal hydrogen carbonate and a gypsum-containing material are brought into contact with each other to obtain calcium carbonate, wherein
the gypsum conversion reaction is ended by monitoring one condition selected from a pH of a reaction solution of the solution A and the gypsum-containing material and at least one concentration selected from a carbonate ion concentration, a hydrogen carbonate ion concentration, and a calcium ion concentration in the reaction solution to determine an end point of the reaction.
